# EUROPEAN PATENT SPECIFICATION

(11) **EP 3 067 683 B1**
(45) Date of publication and mention of the grant of the patent: **09.10.2019**
(21) Application number: 14860113.1
(22) Date of filing: 05.11.2014
(51) Int. Cl.: G01M 99/00, B61C 9/38, F16C 19/00, F16C 19/52, F16C 41/00

(54) **BEARING STATE DETECTION DEVICE AND BEARING STATE DETECTION METHOD**
VORRICHTUNG ZUR ERKENNUNG EINES LAGERSTATUS UND VERFAHREN ZUR ERKENNUNG EINES LAGERSTATUS
DISPOSITIF ET PROCÉDÉ DE DÉTECTION D'ÉTAT DE ROULEMENT

(30) Priority: 05.11.2013 JP 2013229107; 30.10.2014 JP 2014221953
(43) Date of publication of application: 14.09.2016
(73) Proprietor: NSK Ltd., Tokyo 141-8560 (JP)
(72) Inventor: YAMAZAKI Ryota, Fujisawa-shi Kanagawa 251-8501 (JP)
(74) Representative: Grünecker Patent- und Rechtsanwälte PartG mbB
(86) International application number: PCT/JP2014/079360
(87) International publication number: WO 2015/068737

(56) References cited:
- WO-A1-2008/151176
- JP-A- 2006 275 954
- JP-A- 2006 275 954
- JP-A- 2008 134 115
- JP-A- 2008 134 115
- US-A1- 2009 114 020

## Description

### Technical Field

The present invention relates to a bearing state detection device and a bearing state detection method configured to detect a state of a bearing of a gear device configuring a truck of a railroad vehicle.

### Background Art

A rotation device for vibration detection of abnormality in a bearing of a truck of a railroad vehicle disclosed in Patent Document 1 is a device for detecting, with high precision, abnormality in a journal bearing attached to a wheel axle of the truck of the railroad vehicle or a bearing of a reduction gear device and the like in a non-disassembling manner by vibration inspection. In the vibration inspection using that device, the wheel axle is rotated at load conditions close to an actual traveling, and damage vibration generated by a roller in the journal bearing or the reduction gear device is detected by a vibration measurement sensor, so that the vibration of the bearing is measured.

### Prior Art Document

### Patent Document

Patent Document 1: Japanese Patent No. 4427400B
Patent Document 2: Japanese Patent No. 2901666B
Patent Document 3: Japanese Patent No. 4802975B
Patent Document 4: Japanese Patent No. 3284967B

US - 2008/0234964 discloses a bandpass filter for removing unwanted noise and/or vibrational signals from components other than the bearing itself.

### Summary of the Invention

### Problem to be Solved by the Invention

The device disclosed in Patent Document 1 is configured to detect the damage vibration by rotating the wheel axle of the truck of the railroad vehicle at the load conditions close to the actual traveling. However, the railroad vehicle travels while additionally receiving loads which are not reproduced in the device of Patent Document 1. That is, the loads which are to be applied to the railroad vehicle during the actual traveling includes various parameters including environmental factors such as wind, temperature and the like and factors relating to a railway track. Therefore, according to the device of Patent Document 1, even when rotating the wheel axle at the load conditions close to the actual traveling, since the damage vibration based on the loads which are to be actually applied to the bearing during the actual traveling is not detected, an actual state of the bearing may not be detected depending on a location or extent of the damage to the bearing.

An object of the present invention is to provide a bearing state detection device and a bearing state detection method capable of detecting, with high precision, an actual state of damage to a bearing of a gear device configuring a truck of a railroad vehicle.

### Means for Solving the Problem

The above object of the present invention is achieved with the following.
(1) A bearing state detection device configured to detect a state of a bearing of a gear device configuring a truck of a railroad vehicle,
   wherein the bearing state detection device is configured to detect an actual state of damage to the bearing based on information which includes a parameter relating to the state of the bearing and is measured during an actual traveling of the railroad vehicle.
(2) The bearing state detection device according to (1), comprising:
   a filtering processing unit configured to remove a parameter relating to constitutional elements except for the bearing from the information measured during the actual traveling of the railroad vehicle; and
   an actual state analysis unit configured to analyze the actual state relating to the damage to the bearing by analyzing the information processed by the filtering processing unit.
(3) The bearing state detection device according to (2),
   wherein the actual state analysis unit is configured to compare a result obtained by analyzing the information processed by the filtering processing unit with a result obtained by analyzing the information processed by the filtering processing unit when the bearing is normal to determine whether the bearing is damaged.
(4) The bearing state detection device according to one of (1) to (3),
   wherein the information including the parameter relating to the state of the bearing is a measured value of a sensor provided in a vicinity of the bearing of the gear device.
(5) The bearing state detection device according to one of (1) to (4),
   wherein the information including the parameter relating to the state of the bearing is information of at least one of vibration, temperature, torque, displacement, Acoustic Emission (AE) and rotation speed.
(6) A bearing state detection method of detecting a state of a bearing of a gear device configuring a truck of a railroad vehicle, the method comprising:
   detecting an actual state of damage to the bearing based on information which includes a parameter relating to the state of the bearing and is measured during an actual traveling of the railroad vehicle.

### Effects of the Invention

According to the bearing state detection device and the bearing state detection method of the present invention, it is possible to detect, with high precision, the actual state of the damage to the bearing of the gear device configuring the truck of the railroad vehicle.

### Brief Description of the Drawings

FIG. 1 is a schematic view of a truck of a railroad vehicle as seen from a front direction.
FIG. 2 is a schematic view of the truck of the railroad vehicle as seen from below.
FIG. 3 shows arrangements of a bearing state detection device 10 and a sensor 20 in the railroad vehicle according to an embodiment.
FIG. 4 shows test data of a change in torque of a bearing 135 when oil supply is stopped during constant rotation.
FIG. 5 shows test data of a change in temperatures of the bearing 135 when the oil supply is stopped during the constant rotation.
FIG. 6 is a block diagram showing an internal configuration of the bearing state detection device 10 according to an embodiment.
FIG. 7 is a schematic view of an actual machine driving device testing machine 130 for verifying effects of the bearing state detection device 10 according to an embodiment.
FIGS. 8A to 8C show vibration analysis results when damage to the bearing of the actual machine driving device testing machine 130 occurs.
FIG. 9 shows a relation between a vibration occurrence position and a specific frequency component [Hz] in the actual machine driving device testing machine 130.

### Description of Embodiments

Hereinafter, a bearing state detection device and a bearing state detection method according to an embodiment of the present invention will be described with reference to the drawings. The bearing state detection device which is to be described later is a device configured to detect a state of a bearing of a gear device configuring a truck of a railroad vehicle and is to be mounted on the railroad vehicle.

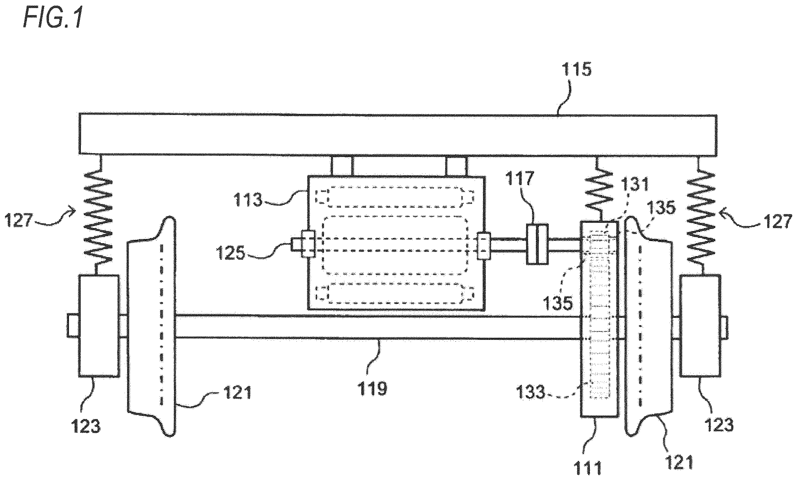

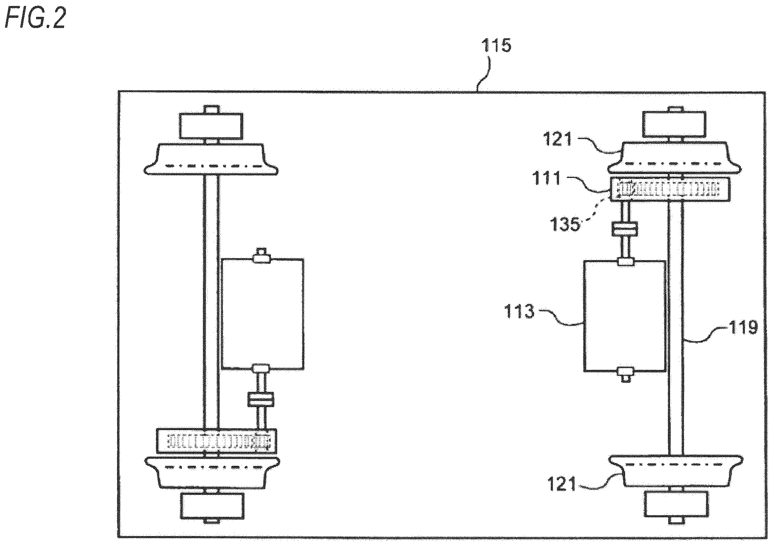

FIG. 1 is a schematic view of a truck of a railroad vehicle as seen from a front direction. FIG. 2 is a schematic view of the truck of the railroad vehicle as seen from below. As shown in FIGS. 1 and 2, the truck of the railroad vehicle mainly includes a gear device (also referred to as "drive device") 111, an electric motor 113, a truck frame 115, a joint 117, an axle 119, wheels 121 and bearings 123.

The gear device 111 configured to function as a speed reducer has a small gear (also referred to as "pinion") 131 and a large gear 133 configured to mesh with each other. The small gear 131 and the large gear 133 are respectively spur gears. The gear device 111 has bearings 135 configured to rotatably support a shaft of the small gear 131. By the bearings 135, the shaft of the small gear 131 is prevented from whirling. A housing of the bearing 135 is fixed to a housing of the gear device 111.

The electric motor 113, which is a driving source of the railroad vehicle, is fixed to the truck frame 115. A rotary shaft 125 of the electric motor 113 is coupled to the shaft of the small gear 131 of the gear device 111 via the joint 117. Therefore, a rotational force of the electric motor 113 is transmitted to the small gear 131 of the gear device 111 via the joint 117. The large gear 133 of the gear device 111 is fitted coaxially with the axle 119. The wheels 121 are also fitted to the axle 119. Therefore, the rotational force transmitted from the electric motor 113 to the small gear 131 of the gear device 111 is transmitted to the wheels 121 via the large gear 133 and the axle 119.

The bearing 123 is to rotatably support the axle 119. A shaft spring 127 for absorbing vibrations (hereinafter, referred to as "traveling vibrations"), which are generated as the railroad vehicle travels, is mounted between the bearing 123 and the truck frame 115. In the meantime, even when the shaft spring 127 is bent due to the traveling vibrations and the truck frame 115 and the axle 119 are thus relatively displaced, the joint 117 is bent to absorb the displacement.

By the bending of the shaft spring 127 or the joint 117 induced by the traveling vibrations, various loads are applied to the bearing 135 configured to support the shaft of the small gear 131 of the gear device 111. Further, the traveling vibrations generated during the actual traveling of the railroad vehicle include various factors like environmental factors such as winds to blow to the railroad vehicle and factors relating to a railway track. When the loads are continuously applied to the bearing 135, damages such as creep, seizing of a collar, pocket wear and the like may be caused to the bearing 135. Also, when the bearing 135 is damaged, parameters such as vibration, temperature, torque, displacement, Acoustic Emission (AE), rotation speed and the like and temporal changes thereof in the small gear 131 of the gear device 111 appear as differences from those at a normal state. In the meantime, when the damaged bearing 135 is ruptured and components of the bearing 135 are scattered in the gear device 111, the gear device 111 is also damaged. Moreover, since a phenomenon from the damage to the rupture of the bearing 135 may be rapidly progressed, it is preferably to detect an actual state of the bearing 135 at a point of time of the damage state before the bearing reaches the rupture. To this end, a bearing state detection device of the embodiment is mounted to the railroad vehicle and is configured to detect an actual state relating to the damage to the bearing 135 based on a change of a parameter corresponding to the damage to the bearing 135 during the actual traveling of the railroad vehicle.

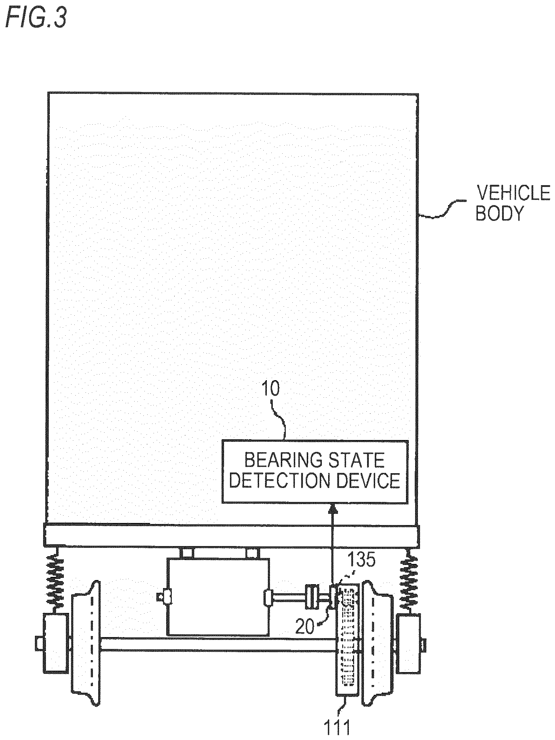

In the below, the bearing state detection device of the embodiment is described. As shown in FIG. 3, a bearing state detection device 10 of the embodiment is provided in the railroad vehicle including the truck. The bearing state detection device 10 is input with a measured value of a sensor 20 configured to measure at least one of parameters such as vibration, temperature, torque, displacement, Acoustic Emission (AE), rotation speed and the like. The sensor 20 is provided in the vicinity of the bearing 135 of the gear device 111. The sensor 20 may be a microphone (not shown) configured to collect sounds in the vicinity of the bearing 135 of the gear device 111. The transmission of information from the sensor 20 to the bearing state detection device 10 may be performed by wired or wireless communication.

The damage to the bearing 135 is caused by creep, seizing of a collar, pocket wear, and the like. When the creep occurs, an end surface of the housing is worn, so that a bearing clearance increases and whirling of the shaft increases. Thereafter, when a rolling element collides more frequently in a pocket, a holder is ruptured. In a case where the seizing of the collar occurs, the bearing clearance increases and the whirling of the shaft increases. Thereafter, when the rolling element collides more frequently in the pocket, the holder is ruptured. When the pocket wear progresses, the whirling of the holder increases, and when the collision frequency of the rolling element in the pocket increases, the holder is ruptured. When the holder is ruptured, the bearing 135 is finally damaged and the rolling element is separated, for example.

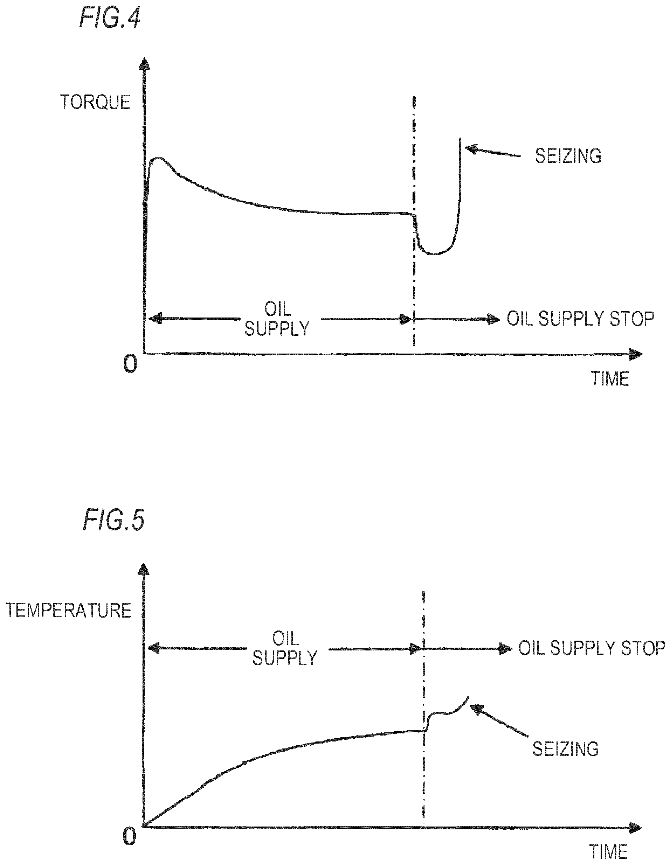

The bearing 135 undergoes stages from the damage to the rupture. However, the parameters indicated by the information from the sensor 20 are changed depending on the contents or extents thereof. For example, in a test example of FIG. 4, the sensor 20 measures torque of the bearing 135. As shown by test data of FIG. 4, when oil supply to the bearing 135 is stopped at a state where the rotation speed of the bearing 135 is kept at a constant value, the measured value of the sensor 20 once decreases and then sharply increases, and the seizing occurs in the bearing 135. Also, in a test example of FIG. 5, the sensor 20 measures temperatures of the bearing 135. As shown by test data of FIG. 5, when the oil supply to the bearing 135 is stopped at a state where the rotation speed of the bearing 135 is kept at a constant value, the measured value of the sensor 20 increases with a characteristic curve, and the seizing occurs in the bearing 135.

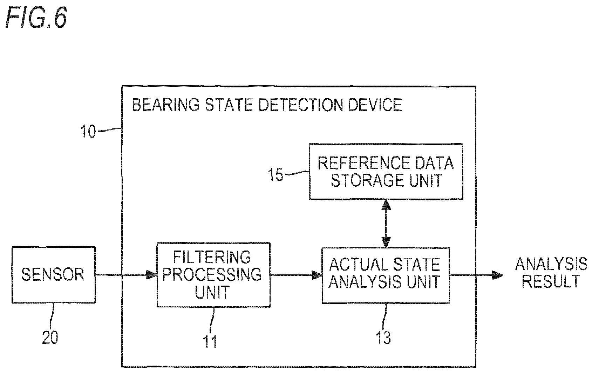

As shown in FIGS. 4 and 5, when the bearing 135 is damaged, the measured values of the sensor 20 are different from those measured at the normal state. Therefore, the bearing state detection device 10 is configured to detect an actual state relating to the damage to the bearing 135 by analyzing the measured values of the sensor 20 obtained during the actual traveling of the railroad vehicle. FIG. 6 is a block diagram showing an internal configuration of the bearing state detection device 10 according to an embodiment. As shown in FIG. 6, the bearing state detection device 10 has a filtering processing unit 11, an actual state analysis unit 13 and a reference data storage unit 15.

The filtering processing unit 11 is configured to remove parameters except for parameters relating to the bearing 135 by filtering the measured values of the sensor 20. That is, the measured values of the sensor 20 include not only parameters relating to states of the bearing 135 but also parameters relating to the other constitutional elements such as the electric motor 113, the axle 119 and the like. In this embodiment, the parameters relating to the constitutional elements except for the bearing 135 are removed so as to detect the actual state relating to the damage to the bearing 135.

The actual state analysis unit 1 is configured to analyze the actual state relating to the damage to the bearing 135 by analyzing the filtered measured values. Meanwhile, in the analysis processing, "ACOUS NAVI" (registered trademark) developed as a bearing abnormality sound analysis system may be used. The actual state analysis unit 13 is configured to store, as reference data, a result obtained by analyzing the measured values filtered at the normal state of the bearing 135 in the reference data storage unit 15 during the actual traveling of the railroad vehicle. The actual state analysis unit 13 is configured to compare the analysis result of the filtered measured values with reference data and determine that the bearing 135 is damaged when there is a difference between both the data. For example, the actual state analysis unit 13 is configured to determine whether the bearing 135 is abnormal by comparing data (for example, effective value or frequency power spectrum), which is obtained by analyzing a vibration measurement signal obtained from the sensor 20 provided in the vicinity of the bearing 135 of the gear device 111, with the data in a predetermined frequency band, which is obtained at the normal state, during the constant speed inertia traveling of the railroad vehicle, in which the vibrations of the constitutional elements (the small gear 131 and the like) except for the bearing 135 are relatively less. In the meantime, the predetermined frequency band is characteristic frequencies of the gear device 111. In contrast, when there is no difference as a result of the comparison, the actual state analysis unit 13 determines that the bearing 135 is normal.

The reference data storage unit 15 is configured to store therein the reference data obtained by analyzing the measured values filtered at the normal state of the bearing 135. In the meantime, the reference data is data obtained during the actual traveling of the railroad vehicle.

In order to verify the effects of the bearing state detection device 10 of the embodiment, a bearing of which an extent of damage was low and a bearing which was normal were incorporated into an actual machine driving device testing machine 130, and a comparison verification test was performed.

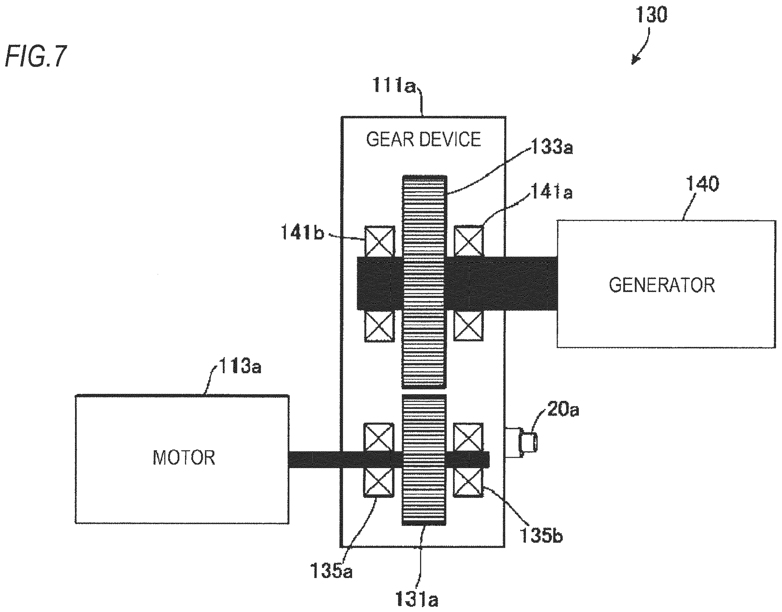

FIG. 7 is a schematic view of the actual machine driving device testing machine 130 for verifying the effects of the bearing state detection device 10 according to the embodiment. In FIG. 7, the actual machine driving device testing machine 130 has a gear device (also referred to as "drive device") 111a, a motor (an electric motor) 113a, a generator 140 and a vibration sensor 20a. The gear device 111a is configured to function as a speed reducer and has a small gear (also referred to as "pinion") 131a and a large gear 133a configured to mesh with each other. The small gear 131a and the large gear 133a are respectively spur gears. The gear device 111a has two bearings 135a, 135b configured to rotatably support a shaft of the small gear 131a and two bearings 141a, 141b configured to rotatably support a shaft of the large gear 133a. The bearings 135a, 135b are arranged at both sides of the small gear 131a so as to sandwich the small gear therebetween, and the bearings 141a, 141b are arranged at both sides of the large gear 133a so as to sandwich the large gear therebetween.

A housing (not shown) of each of the bearings 135a, 135b and the bearings 141a, 141b is fixed to a housing of the gear device 111a. By the bearings 135a, 135b, the shaft of the small gear 131a is prevented from whirling, and by the bearings 141a, 141b, the shaft of the large gear 133a is prevented from whirling. A rotational force of the motor 113a is transmitted to the small gear 131a of the gear device 111a. The rotational force transmitted from the motor 113a to the small gear 131a is transmitted to the generator 140 via the large gear 133a. Therefore, the motor 113a operates, so that power is generated from the generator 140. The vibration sensor 20a is equivalent to the sensor 20, and is transmitted in the vicinity of the bearings 135a, 135b of the gear device 111a. The vibration sensor 20a is used to detect vibrations caused due to the seizing of collars of the bearing 135a, 135b, the pocket wear, the whirling of a holder (which is one of components of the bearing and is configured to hold a plurality of rolling elements at a constant interval), and the like. A measured value of the vibration sensor 20a is input to the bearing state detection device 10.

In the comparison verification test, the bearing 135b was set as a bearing of which an extent of damage was low, and the bearing 135a was set as a normal bearing. Also, the test was performed at conditions that the number of rotations was set to 5680 min⁻¹ equivalent to 320 km/h traveling of the actual machine and the load (torque) to the bearing was set to 736 N·m. In the meantime, both the bearings 141a, 141b were all normal products.

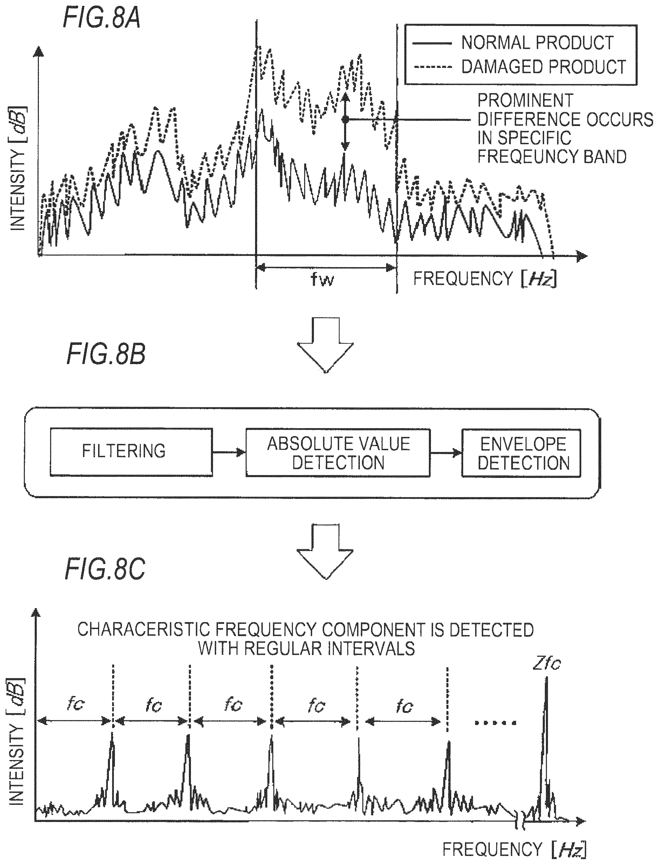

FIGS. 8A to 8C show vibration analysis results when damage to the bearing of the actual machine driving device testing machine 130 occurs. FIG. 8A shows intensities (vibration level [dB]) of the bearing 135b (the damaged product) and the bearing 135a (the normal product), and a horizontal axis indicates a frequency [Hz] and a vertical axis indicates an intensity [dB]. In the meantime, when analyzing the vibrations of the bearing, Fast Fourier Transform (FFT) was used. In case of the bearing 135a (the normal product), the intensity thereof [dB] formed a waveform shown with the solid line. In case of the bearing 135b (the damaged product), the intensity thereof [dB] formed a waveform shown with the dashed line. FIG. 8B shows respective processing (filtering processing, absolute value detection processing and envelope detection processing) of the vibration analysis. FIG. 8C shows a vibration analysis result of the bearing 135b (the damaged product), and a horizontal axis indicates a frequency [Hz] and a vertical axis indicates an intensity [dB].

As a sign of the damage to the bearing, which is caused due to the seizing of the collar of the bearing 135b, a great difference occurs between the intensities (vibration level [dB]) in a specific frequency band fw (FIG. 8A). Also, in the vibration analysis where the filtering processing, the absolute value detection processing and the envelope processing (envelope detection processing) have been performed, a characteristic frequency "fc" resulting from a revolution period of the holder (configured to hold a plurality of rolling elements with a constant interval) of the bearing 135b was detected at regular intervals (FIG. 8C). Further, a "Zfc" component, which is a characteristic frequency component arising from an outer ring of the bearing 135b, appeared depending on the extent of the seizing of the collar (FIG. 8C).

Further, as a sign of the damage to the bearing resulting from the pocket wear (a part for accommodating the rolling elements of the holder), the characteristic frequency component "fc", which is the revolution period of the holder, appeared. However, the intensity thereof was weak and the number of the characteristic frequency components (the number of "fc") was small.

At a state of the damage to the bearing where the pocket wears progresses and the holder whirls, an outer diameter surface of the holder and an inner diameter surface of the outer ring of the bearing were contacted to each other, so that the "Zfc" component, which is the characteristic frequency component arising from the outer ring, prominently appeared.

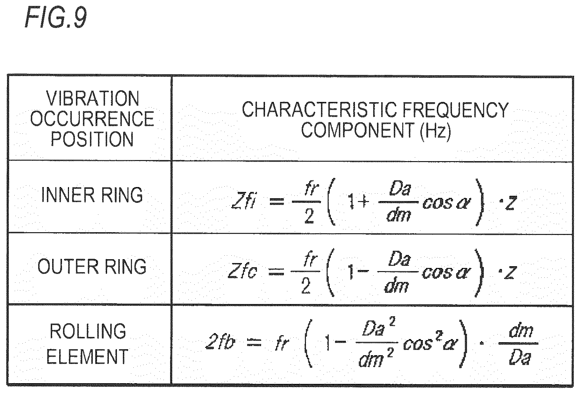

FIG. 9 shows a relation between a position of the damage to the bearing and a specific frequency component [Hz]. In FIG. 9, when a vibration occurrence position is located at the inner ring, the specific frequency component [Hz] is expressed by an equation indicated by Zfi, when a vibration occurrence position is located at the outer ring, the specific frequency component [Hz] is expressed by an equation indicated by Zfc, and when a vibration occurrence position is located at the rolling element, the specific frequency component [Hz] is expressed by an equation indicated by 2fb. Here, Z indicates the number of the rolling elements, fr indicates the rotation speed of the inner ring [Hz], fc indicates the rotation speed of the holder [Hz], fi=fr-fc, fb indicates the rotation rate of the rolling element [Hz], dm indicates a pitch circle diameter, Da indicates a diameter of the rolling element, and α indicates a contact angle.

As described above, it was confirmed that the abnormalities such as the seizing of the collar of the bearing 135b, the pocket wear of the holder of the bearing 135b, the whirling of the holder of the bearing 135b and the like could be detected by performing the vibration analysis in which the FFT vibration analysis processing, the filtering processing and the absolute value detection processing were performed and then the envelope processing was performed through the detection by the vibration sensor 20a. Also, it is possible to calculate an occurrence frequency resulting from the meshing between the small gear 131a and the large gear 133a. Therefore, by excluding the occurrence frequency from a target in advance, it was confirmed that it was possible to determine a sign as to what factors (the seizing of the collar, the pocket wear and the whirling of the holder) cause the damage, from the respective vibration features.

As described above, the bearing state detection device 10 of the embodiment is configured to detect the actual state of the damage to the bearing 135 by determining whether there is a change in the parameters as a result of the damage to the bearing 135, based on the information from the sensor 20 obtained during the actual traveling of the railroad vehicle. In this way, since a sign relating to the abnormality of the bearing 135 is diagnosed, it is possible to rapidly detect an abnormal state of the bearing 135 with high precision. As a result, it is possible to implement the maintenance capable of realizing the high efficiency and the low cost without a time loss, and to implement an optimal driving control of the railroad vehicle. Also, since it is possible to detect a possibility of the damage before the bearing 135 reaches the rupture, it is possible to take action at a stage before periodic maintenance. Therefore, it is possible to highly improve the safety and reliability of the gear device 111 including the bearing 135.

In the meantime, the present invention is not limited to the configuration of the above embodiment, and any configuration can be applied inasmuch as it can implement the functions defined in the claims or the functions of the configuration of the embodiment.

### Description of Reference Numerals

- 10: bearing state detection device
- 11: filtering processing unit
- 13: actual state analysis unit
- 15: reference data storage unit
- 20: sensor
- 111: gear device
- 113: electric motor
- 115: truck frame
- 117: joint
- 119: axle
- 121: wheel
- 123: bearing
- 131: small gear
- 133: large gear
- 135: bearing

## Claims

1. A bearing state detection device (10) configured to detect a state of a bearing (123) of a gear device (111) included in a truck of a railroad vehicle,
wherein the bearing state detection device (10) is configured to detect an actual state of damage to the bearing (123) based on information which includes a parameter relating to the state of the bearing (123) and is measured during an actual traveling of the railroad vehicle,
the bearing state detection device (10) comprising:
a filtering processing unit (11); and
an actual state analysis unit (13) configured to analyze the actual state relating to the damage to the bearing (123) by analyzing the information processed by the filtering processing unit (11),
wherein the actual state analysis unit (13) is configured to compare a result obtained by analyzing the information processed by the filtering processing unit (11) with a result obtained by analyzing the information processed by the filtering processing unit (11) when the bearing is in a normal state in order to determine whether the bearing (123) is damaged, whereby the information including the parameter relating to the state of the bearing (123) is information of at least one of vibration, temperature, torque, displacement, Acoustic Emission (AE) and rotation speed and the filtering processing unit (11) is configured to remove a parameter relating to constitutional elements except for the bearing (123) from the information measured during the actual traveling of the railroad vehicle,
**characterised in that**
the filtering processing unit (11) is configured to remove a parameter relating to an axle (119) of the railroad vehicle from information which is obtained during constant speed inertia traveling of the railroad vehicle.

2. The bearing state detection device (10) according to claim 1,
wherein the information including the parameter relating to the state of the bearing (123) is a measured value of a sensor provided in a vicinity of the bearing (123) of the gear device (111).

3. A bearing state detection method of detecting a state of a bearing (123) of a gear device (111) included in a truck of a railroad vehicle, wherein an actual state of damage to the bearing (123) is detected based on information which includes a parameter relating to the state of the bearing (123), the method comprising:
a measurement during an actual traveling of the railroad vehicle,
a filtering process, and
analyzing an actual state relating to a damage to the bearing (123) by analyzing the information after the filtering process,
wherein a result obtained by analyzing the information after the filtering process is compared with stored reference data in order to determine whether the bearing (123) is damaged, the reference data being a result obtained by analyzing the information after the filtering process when the bearing (123) is in a normal state, whereby
in the filtering process, a parameter relating to constitutional elements except for the bearing (123) is removed from the information about a state of the bearing (123) gathered during the actual traveling of the railroad vehicle, the information being at least one of vibration, temperature, torque, displacement, Acoustic Emission (AE) and rotation speed,
**characterised in that**
the filtering processing unit (11) removes a parameter relating to an axle (119) of the railroad vehicle from information which is obtained during constant speed inertia traveling of the railroad vehicle.

## Patentansprüche

1. Lagerzustandserfassungseinrichtung (10), die ausgebildet ist, einen Zustand eines Lagers (123) einer Getriebeeinrichtung (111), die in einem Antriebswagen eines Schienenfahrzeugs enthalten ist, zu erfassen,
wobei die Lagerzustandserfassungseinrichtung (10) ausgebildet, einen Ist-Zustand eines Schadens an dem Lager (123) auf der Grundlage von Information zu erfassen, die einen Parameter enthält, der den Zustand des Lagers (123) betrifft und während einer tatsächlichen Fahrt des Schienenfahrzeugs gemessen wird,
wobei die Lagerzustandserfassungseinrichtung (10) aufweist:
eine Filterverarbeitungseinheit (11); und
eine Ist-Zustandsauswerteeinheit (13), die ausgebildet ist, den Ist-Zustand in Bezug auf den Schaden an dem Lager (123) durch Auswerten der Information zu bewerten, die durch die Filterverarbeitungseinheit (11) verarbeitet wird;
wobei die Ist-Zustandsauswerteeinheit (13) ausgebildet ist, ein durch das Auswerten der von der Filterverarbeitungseinheit (11) verarbeiteten Information erhaltenes Ergebnis mit einem Ergebnis zu vergleichen, das durch Auswerten der Information erhalten wird, die von der Filterverarbeitungseinheit (11) verarbeitet wird, wenn das Lager in einem normalen Zustand ist, um zu ermitteln, ob das Lager (123) beschädigt ist, wobei die Information, die den Parameter enthält, der den Zustand des Lagers (123) betrifft, eine Information über Schwingungen und/oder eine Temperatur und/oder ein Drehmoment und/oder eine Auslenkung und/oder eine Schallemission (AE) und/oder eine Drehgeschwindigkeit ist, und
die Filterverarbeitungseinheit (11) ausgebildet ist, einen Parameter, der Bestandteile, das Lager (123) ausgenommen, betrifft, aus der Information zu entfernen, die während der tatsächlichen Fahrt des Schienenfahrzeugs gemessen wird,
**dadurch gekennzeichnet, dass**
die Filterverarbeitungseinheit (11) ausgebildet ist, einen Parameter, der eine Achse (119) des Schienenfahrzeugs betrifft, aus der Information zu entfernen, die während einer Konstantgeschwindigkeitsträgheitsfahrt des Schienenfahrzeugs erhalten wird.

2. Lagerzustandserfassungseinrichtung (10) nach Anspruch 1,
wobei die Information, die den Parameter enthält, der den Zustand des Lagers (123) betrifft, ein Messwert eines Sensors ist, der in der Nähe des Lagers (123) der Getriebeeinrichtung (111) vorgesehen ist.

3. Lagerzustandserfassungsverfahren zum Erfassen eines Zustands eines Lagers (123) einer Getriebeeinrichtung (111), die in einem Antriebswagen eines Schienenfahrzeugs enthalten ist, wobei ein Ist-Zustand eines Schadens an dem Lager (123) auf der Grundlage von Information erfasst wird, die einen Parameter enthält, der den Zustand des Lagers (123) betrifft, wobei das Verfahren umfasst:
eine Messung während einer tatsächlichen Fahrt des Schienenfahrzeugs,
einen Filtervorgang und
Auswerten eines Ist-Zustands bezogen auf einen Schaden an dem Lager (123) durch Auswerten der Information nach dem Filtervorgang,
wobei ein durch Auswerten der Information nach dem Filtervorgang erhaltenes Ergebnis mit gespeicherten Referenzdaten verglichen wird, um zu ermitteln, ob das Lager (123) beschädigt ist, wobei die Referenzdaten ein Ergebnis sind, das nach Auswerten der Information nach dem Filtervorgang erhalten wird, wenn das Lager (123) in einem normalen Zustand ist, wobei in dem Filtervorgang ein Parameter, der Bestandteile, mit Ausnahme des Lagers (123), betrifft, aus der Information über einen Zustand des Lagers (123) entfernt wird, die während der tatsächlichen Fahrt des Schienenfahrzeugs gewonnen wird, wobei die Information Schwingungen und/oder Temperatur und/oder Drehmoment und/oder Auslenkung und/oder Schallemissionen (AE) und/oder Drehgeschwindigkeit betrifft,
**dadurch gekennzeichnet, dass**
die Filterverarbeitungseinheit (11) einen Parameter, der eine Achse (119) des Schienenfahrzeugs betrifft, aus Information entfernt, die während einer Konstantgeschwindigkeitsträgheitsfahrt des Schienenfahrzeugs erhalten wird.

## Revendications

1. Dispositif de détection d'état de roulement (10) configuré pour détecter un état d'un roulement (123) d'un dispositif d'engrenage (111) inclus dans un wagon d'un véhicule ferroviaire,
dans lequel le dispositif de détection d'état de roulement (10) est configuré pour détecter un état actuel d'endommagement du roulement (123) sur la base d'informations comprenant un paramètre relatif à l'état du roulement (123) et est mesuré pendant un déplacement actuel du véhicule ferroviaire,
le dispositif de détection d'état de roulement (10) comprenant :
une unité de traitement de filtrage (11) ; et
une unité d'analyse d'état actuel (13) configurée pour analyser l'état actuel relatif à l'endommagement du roulement (123) en analysant les informations traitées par l'unité de traitement de filtrage (11),
dans lequel l'unité d'analyse d'état actuel (13) est configurée pour comparer un résultat obtenu en analysant les informations traitées par l'unité de traitement de filtrage (11) avec un résultat obtenu en analysant les informations traitées par l'unité de traitement de filtrage (11) lorsque le roulement est dans un état normal afin de déterminer si le roulement (123) est endommagé, de sorte que
les informations comprenant le paramètre relatif à l'état du roulement (123) sont des informations d'au moins l'une des caractéristiques suivantes : vibration, température, couple, déplacement, Émission Acoustique (AE) et vitesse de rotation, et
l'unité de traitement de filtrage (11) est configurée pour supprimer un paramètre relatif à des éléments constitutifs à l'exception du roulement (123) depuis les informations mesurées lors du déplacement actuel du véhicule ferroviaire, **caractérisé en ce que**
l'unité de traitement de filtrage (11) est configurée pour supprimer un paramètre relatif à un essieu (119) du véhicule ferroviaire depuis des informations qui sont obtenues pendant un déplacement à inertie constante du véhicule ferroviaire.

2. Dispositif de détection d'état de roulement (10) selon la revendication 1,
dans lequel les informations comprenant le paramètre relatif à l'état du roulement (123) sont une valeur mesurée d'un capteur agencé à proximité du roulement (123) du dispositif d'engrenage (111).

3. Procédé de détection d'état de roulement consistant à détecter l'état d'un roulement (123) d'un dispositif d'engrenage (111) inclus dans un wagon d'un véhicule ferroviaire, dans lequel un état actuel d'endommagement du roulement (123) est détecté sur la base d'informations qui comprennent un paramètre relatif à l'état du roulement (123), le procédé comprenant :
une mesure lors d'un déplacement actuel du véhicule ferroviaire,
un processus de filtrage, et
l'analyse d'un état actuel relatif à un endommagement du roulement (123) en analysant les informations après le processus de filtrage,
dans lequel un résultat obtenu en analysant les informations après le processus de filtrage est comparé à des données de référence stockées afin de déterminer si le roulement (123) est endommagé, les données de référence étant un résultat obtenu en analysant les informations après le processus de filtrage lorsque le roulement (123) est dans un état normal, de sorte que
lors du processus de filtrage, un paramètre relatif à des éléments constitutifs à l'exception du roulement (123) est supprimé des informations relatives à un état du roulement (123) recueillies pendant le déplacement actuel du véhicule ferroviaire, les informations étant au moins l'une des caractéristiques suivantes : vibration, température, couple, déplacement, Émission Acoustique (AE) et vitesse de rotation,
**caractérisé en ce que**
l'unité de traitement de filtrage (11) supprime un paramètre relatif à un essieu (119) du véhicule ferroviaire depuis des informations qui sont obtenues pendant un déplacement à inertie constante du véhicule ferroviaire.
